# EUROPÄISCHE PATENTANMELDUNG

(11) **EP 3 028 823 A1**
(43) Veröffentlichungstag der Anmeldung: **08.06.2016**
(21) Anmeldenummer: 14195558.3
(22) Anmeldetag: 01.12.2014
(51) Int. Cl.: B25F 5/00

(54) **Handwerkzeugmaschine, lüfterloser Akkumulator**

(71) Anmelder: HILTI Aktiengesellschaft, 9494 Schaan (LI)
(72) Erfinder: Meixner, Ralf, 87656 Germaringen (DE); Jakob, Manfred, 86916 Kaufering (DE); Thanner, Thomas, 81243 Muenchen (DE)
(74) Vertreter: Hilti Aktiengesellschaft Corporate Intellectual Property

(57) **Zusammenfassung**

Handwerkzeugmaschine (100), insbesondere Bohrhammer oder Kombihammer, mit einem Werkzeuggehäuse (90), das eine zur auswechselbaren Aufnahme eines Akkumulators (200) oder Netzstromteils (300) ausgebildete Aufnahmebucht (80) aufweist, wobei die Handwerkzeugmaschine (100) einen elektrischen Antriebsmotor (70) mit einem Kühlungslüfter (60) enthält. Das Werkzeuggehäuse (90) weist einen innerhalb der Aufnahmebucht (80) angeordneten ersten Lüftungsöffnungsabschnitt (40) auf, durch den ein durch den Kühlungslüfter (60) erzeugter Volumenstrom (V) führbar ist.

## Beschreibung

Die vorliegende Erfindung betrifft eine Handwerkzeugmaschine, insbesondere Bohrhammer oder Kombihammer, mit einem Werkzeuggehäuse, das eine zur auswechselbaren Aufnahme eines Akkumulators oder Netzstromteils ausgebildete Aufnahmebucht aufweist, wobei die Handwerkzeugmaschine einen elektrischen Antriebsmotor mit einem Kühlungslüfter enthält.

Durch den Kühlungslüfter kann der elektrische Antriebsmotor der Handwerkzeugmaschine, der im Betrieb Wärme entwickelt, gekühlt werden.

Handwerkzeugmaschine, insbesondere einen Bohrhammer oder Kombihammer, können wahlweise durch einen Akkumulator oder ein Netzstromteil mit elektrischer Energie versorgt werden, wenn diese mit der Handwerkzeugmaschine verbunden sind. Das Netzstromteil weist hierzu ein Stromkabel auf, welches eine Verbindung zu einer Netzstromversorgungsquelle (auch Steckdose genannt) herstellt.

Die vorliegende Erfindung betrifft ebenfalls einen lüfterlosen Akkumulator für eine Handwerkzeugmaschine, wobei der lüfterlose Akkumulator zur auswechselbaren Aufnahme innerhalb einer Aufnahmebucht einer Handwerkzeugmaschine ausgebildet ist.

Des Weiteren betrifft die vorliegende Erfindung ein Werkzeugsystem mit einer Handwerkzeugmaschine und einem lüfterlosen Akkumulator.

Es ist Aufgabe der vorliegenden Erfindung eine Handwerkzeugmaschine, einen Akkumulator, sowie ein Werkzeugsystem mit verbesserter Kühlungseigenschaft bereitzustellen.

Bezüglich der Handwerkzeugmaschine wird die Aufgabe dadurch gelöst, dass das Werkzeuggehäuse einen innerhalb der Aufnahmebucht angeordneten ersten Lüftungsöffnungsabschnitt aufweist, durch den ein durch den Kühlungslüfter erzeugter Volumenstrom führbar ist.

Gemäß einer vorteilhaften Ausführungsform der vorliegenden Erfindung kann vorgesehen sein, dass der erste Lüftungsöffnungsabschnitt derart vorgesehen ist, dass der Volumenstrom durch den in die Aufnahmebucht aufgenommenen Akkumulator mit einer teilweisen geöffneten Oberfläche führbar ist. Hierdurch kann der Akkumulator effizient mittels des Kühlers der Handwerkzeugmaschine gekühlt, ohne dass in dem Akkumulator ein separater Kühler vorgesehen sein muss.

Um einen direkten Kühlstrom für die Handwerkzeugmaschine und insbesondere für den Antriebsmotor bereit zu stellen, der eine effiziente Kühlung gewährleistet, kann es vorteilhaft sein, dass das Werkzeuggehäuse einen von dem ersten Lüftungsöffnungsabschnitt verschiedenen zweiten Lüftungsöffnungsabschnitt aufweist, der außerhalb der Aufnahmebucht angeordnet ist und durch den der durch den Kühlungslüfter erzeugte Volumenstrom zumindest teilweise führbar ist.

Entsprechend einer weiteren vorteilhaften Ausführungsform kann es möglich sein, dass die Handwerkzeugmaschine ein Strömungssteuermittel aufweist, das ausgebildet ist, einen durch den Kühlungslüfter erzeugten Volumenstrom zwischen dem ersten Lüftungsöffnungsabschnitt und dem zweiten Lüftungsöffnungsabschnitt zu verteilen. Hierdurch kann der Volumenstrom des Kühlungslüfters so gesteuert werden, dass sowohl der Akkumulator als auch der Antriebsmotor gekühlt werden.

Da die Temperatur des Akkumulators während seines Gebrauchs in der Handwerkzeugmaschine bis zu einem kritischen Wert ansteigen kann, bei dem die Leistungsfähigkeit oder auch Funktionsfähig des Akkumulators negativ beeinflusst ist, kann es vorteilhaft sein, dass das Strömungssteuermittel in Abhängigkeit einer in dem Akkumulator gemessenen Temperatur regelbar ist.

Gemäß einer bevorzugten Ausführungsform der vorliegenden Erfindung kann es vorteilhaft sein, dass das Strömungssteuermittel in Abhängigkeit wenigstens einer in der Handwerkzeugmaschine gemessenen Temperatur regelbar ist. Hierdurch kann effektiv und gezielt die Handwerkzeugmaschine und insbesondere der Antriebsmotor mit Hilfe des der Volumenstroms des Kühlungslüfters gekühlt werden, wenn diese eine kritische Temperatur erreicht haben.

Um den gesamten Volumenstrom des Kühlungslüfters entweder nur den Akkumulator oder nur durch die Handwerkzeugmaschine strömen zu lassen, um folglich eine maximale Kühlung entweder des Akkumulators oder der Handwerkzeugmaschine zu erreichen, kann es vorteilhaft sein, dass das Strömungssteuermittel als eine von einer Steuerungseinrichtung betätigbare Umschaltklappe ausgebildet ist, die in einer ersten Schaltstellung den ersten Lüftungsöffnungsabschnitt und in einer zweiten Schaltstellung den zweiten Lüftungsöffnungsabschnitt verschließt.

Gemäß einer vorteilhaften Ausführungsform der vorliegenden Erfindung kann vorgesehen sein, dass die Umschaltklappe in wenigstens einer Schaltstellung zwischen der ersten Schaltstellung und der zweiten Schaltstellung einstellbar ist, wodurch ein höherer Volumenstromanteil entweder durch den ersten Lüftungsöffnungsabschnitt oder den zweiten Lüftungsöffnungsabschnitt zugeordnet ist. Hierdurch kann entweder eine stärkere Kühlung des Akkumulators und eine schwächere Kühlung der Handwerkzeugmaschine oder aber eine stärkere Kühlung der Handwerkzeugmaschine und eine schwächere Kühlung des Akkumulators erreicht werden. Darüber hinaus ist auch eine gleich starke Kühlung des Akkumulators sowie der Handwerkzeugmaschine gleichzeitig möglich.

Es hat sich als vorteilhaft herausgestellt, wenn der erste Lüftungsöffnungsabschnitt und der zweite Lüftungsöffnungsabschnitt voneinander verschiedenen Lüftungsöffnungen zugehörig ist. Alternativ können der erste Lüftungsöffnungsabschnitt und der zweite Lüftungsöffnungsabschnitt zu einer gleichen Lüftungsöffnung gehören. Bevorzugt sind der erste Lüftungsöffnungsabschnitt und der zweite Lüftungsöffnungsabschnitt zueinander im Wesentlichen senkrecht angeordnet.

Bezüglich des lüfterlosen Akkumulators für eine Handwerkzeugmaschine, der eine zur auswechselbaren Aufnahme des Akkumulators ausgebildete Aufnahmebucht und einen elektrischen Antriebsmotor mit einem Kühlungslüfter aufweist, wird die vorliegende Aufgabe dadurch gelöst, dass der lüfterlose Akkumulator einen inneren und zur Umgebung offenen Lüftungskanal aufweist, über den der lüfterlose Akkumulator mittels eines durch den Kühlungslüfter der Handwerkzeugmaschine erzeugten Volumenstroms zwangskühlbar ist, wenn der lüfterlose Akkumulator in der Aufnahmebucht der Handwerkzeugmaschine aufgenommen ist.

Bezüglich des Werkzeugsystems wird die vorliegende Aufgabe durch ein Werkzeugsystem gelöst, das eine vorbeschriebene Handwerkzeugmaschine und einen vorbeschriebenen lüfterlosen Akkumulator aufweist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung eines erfindungsgemäßen lüfterlosen Akkumulators;
- Fig. 2: eine schematische Darstellung einer erfindungsgemäßen Handwerkzeugmaschine mit dem lüfterlosen Akkumulator gemäß einer ersten Ausführungsform;
- Fig. 3: eine schematische Darstellung einer erfindungsgemäßen Handwerkzeugmaschine mit dem lüfterlosen Akkumulator gemäß einer zweiten Ausführungsform;
- Fig. 4: eine schematische Darstellung einer erfindungsgemäßen Handwerkzeugmaschine mit dem lüfterlosen Akkumulator gemäß einer dritten Ausführungsform mit einer Umschaltklappe in einer ersten Schaltstellung;
- Fig. 5: eine schematische Darstellung einer erfindungsgemäßen Handwerkzeugmaschine mit dem lüfterlosen Akkumulator gemäß der dritten Ausführungsform mit einer Umschaltklappe in einer weiteren Schaltstellung;
- Fig. 6: eine schematische Darstellung einer erfindungsgemäßen Handwerkzeugmaschine mit dem lüfterlosen Akkumulator gemäß der dritten Ausführungsform mit einer Umschaltklappe in einer zweiten Schaltstellung; und
- Fig. 7: eine schematische Darstellung einer erfindungsgemäßen Handwerkzeugmaschine mit dem lüfterlosen Akkumulator gemäß einer vierten Ausführungsform.

### Ausführungsbeispiel:

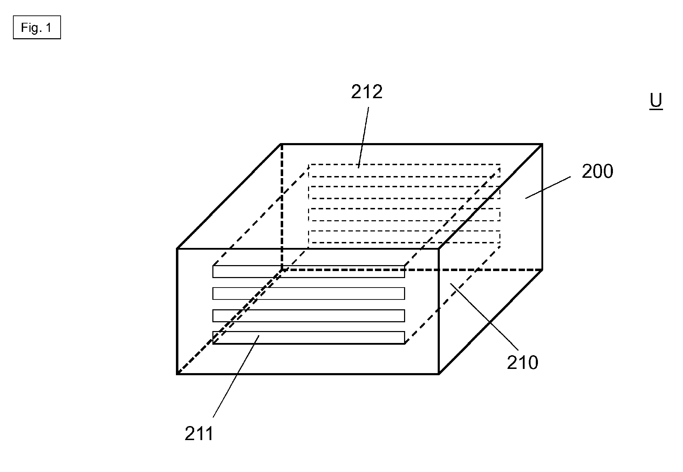

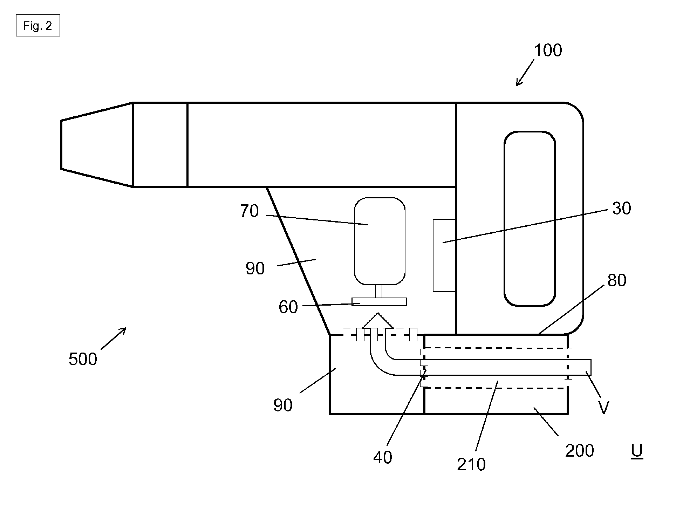

Fig. 1 zeigt einen erfindungsgemäßen lüfterlosen Akkumulator 200. Der Akkumulator 200 ist zur werkzeuglosen auswechselbaren Aufnahme in einer nicht gezeigten Aufnahmebucht 80 (vgl. Fig. 2) ausgebildet, wobei vorliegend auf eine Darstellung von Befestigungsmitteln verzichtet wurde.

Der Akkumulator 200 enthält einen inneren Lüftungskanal 210, über den der Akkumulator 200 zwangskühlbar ist. Der innere Lüftungskanal 210 verläuft zwischen einer Frontlüftungsöffnung 211 und einer Rücklüftungsöffnung 212, die auf einander gegenüberliegenden Stirnseiten des Akkumulators 200 angeordnet sind. Mit Hilfe des inneren Lüftungskanals 210 bzw. eines durch den Lüftungskanal 210 hindurchgeführten Lüftungsstroms kann der Akkumulator 200 sowie die Zellen und Elektronik, welche sich im Inneren des Akkumulators 200 befinden, gekühlt werden. In den Figuren sind die Zellen und die Elektronik des Akkumulators 200 nicht gezeigt. Durch die Frontlüftungsöffnung 211 und Rücklüftungsöffnung 212 weist der Akkumulator 200 eine geöffnete Oberfläche auf.

In Fig. 2 ist eine erste Ausführungsform einer erfindungsgemäßen Handwerkzeugmaschine 100 in Form eines Bohrhammers dargestellt. Die Handwerkzeugmaschine 100 enthält dabei im Wesentlichen ein Werkzeuggehäuse 90, welches eine zur auswechselbaren Aufnahme eines Akkumulators 200 ausgebildete Aufnahmebucht 80 aufweist. In die Aufnahmebucht 80 dient zur auswechselbaren Aufnahme des Akkumulators 200. In dem Werkzeuggehäuse 90 ist des Weiteren ein elektrischer Antriebsmotor 70 mit einem Kühlungslüfter 60 sowie eine Steuerungseinrichtung 30 positioniert. Der Antriebsmotor 70 dient zum Erzeugen eines Drehmoments, welches über ein Getriebe an ein Werkzeug übertragen wird. In den Figuren ist weder das Getriebe noch das Werkzeug dargestellt. Die Steuerungseinrichtung 30 dient zur Steuerung und Regelung des Antriebsmotors 70, einer Umschaltklappe 20 sowie einer ersten und zweiten Lamellenanordnung 10a, 10b. Die Steuerungseinrichtung 30 ist hierzu über nicht gezeigte Leitungen mit dem Antriebsmotor 70, der Umschaltklappe 20 und den Lamellenanordnungen 10a, 10b verbunden. Die Umschaltklappe 20 sowie die erste und zweite Lamellenanordnung 10a, 10b werden nachfolgend im Detail beschrieben.

Wie ebenfalls in Fig. 2 ersichtlich, enthält das Werkzeuggehäuse 90 einen ersten Lüftungsöffnungsabschnitt 40. Der erste Lüftungsöffnungsabschnitt 40 stellt im Wesentlichen eine Öffnung in das Werkzeuggehäuse 90 dar, durch welches der Kühlungslüfter 60 Kühlungsluft aus der Umgebung U ansaugen kann. Der erste Lüftungsöffnungsabschnitt 40 ist dabei so zu der Aufnahmebucht 80 angeordnet, dass die Frontlüftungsöffnung 211 des Akkumulators 200 an dem Lüftungsöffnungsabschnitt 40 anliegt, wenn der Akkumulators 200 in der Aufnahmebucht 80 mit der Handwerkzeugmaschine 100 verbunden ist. Mit Hilfe des vorstehend beschriebenen inneren Lüftungskanals 210 kann ein Volumenstrom, welcher von dem Kühlungslüfter 60 im Inneren der Handwerkzeugmaschine 100 aus der Umgebung U angesaugt wird, durch den Akkumulator 100 strömen, um diesen zu kühlen. Der Volumenstrom V tritt dabei durch die Rücklüftungsöffnung 212 in den Akkumulator 200 ein, durchquert den Lüftungskanal 210, tritt durch die Frontlüftungsöffnung 211 aus dem Akkumulator 200 und dringt durch den ersten Lüftungsöffnungsabschnitt 40 in das Werkzeuggehäuse 90 ein. Der Akkumulator 200 wird somit durch den Volumenstrom V des Kühlungslüfters 60 gekühlt.

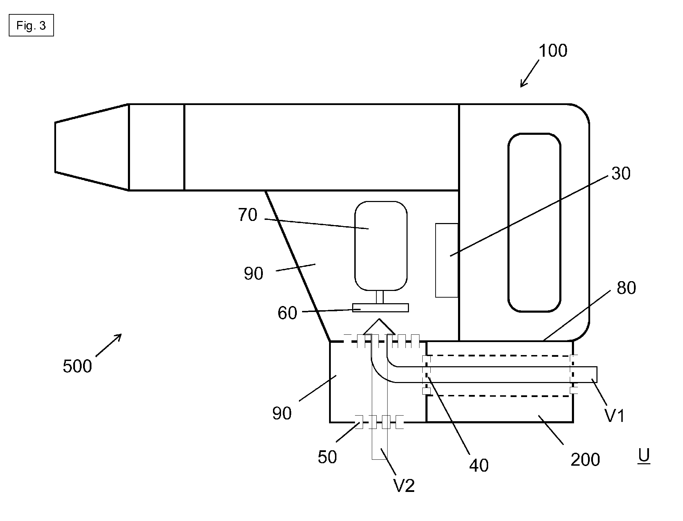

Fig. 3 zeigt eine zweite Ausführungsform der erfindungsgemäßen Handwerkzeugmaschine 100, welche im Wesentlichen identisch zu der ersten Ausführungsform ist. Im Unterschied zu der ersten Ausführungsform enthält das Werkzeuggehäuse 90 zusätzlich zu dem ersten Lüftungsöffnungsabschnitt 40 einen zweiten Lüftungsöffnungsabschnitt 50. Wie in Fig. 3 ersichtlich, sind der erste Lüftungsöffnungsabschnitt 40 und der zweite Lüftungsöffnungsabschnitt 50 voneinander verschiedenen Lüftungsöffnungen zugehörig, die senkrecht zueinander am Werkzeuggehäuse 90 angeordnet sind. Der zweite Lüftungsöffnungsabschnitt 50 stellt wie auch der erste Lüftungsöffnungsabschnitt 40 eine Öffnung in das Werkzeuggehäuse 90 dar, durch den ein von dem Kühlungslüfter 60 erzeugter Volumenstrom V von der Umgebung U in das Innere der Handwerkzeugmaschine 100 angesaugt werden kann. Dabei wird durch den ersten Lüftungsöffnungsabschnitt 40 ein erster Volumenstrom V1 und durch den zweiten Lüftungsöffnungsabschnitt 50 ein zweiter Volumenstrom V2 angesaugt. Durch den zweiten Lüftungsöffnungsabschnitt 50 gemäß der zweiten Ausführungsform wird im Verhältnis zu der ersten Ausführungsform eine separate Kühlung in Form des Volumenstroms V2 für den Antriebsmotor 70 bereitgestellt, der nicht durch den Akkumulator 200 geführt und folglich auch nicht durch den Akkumulator 200 erwärmt wurde.

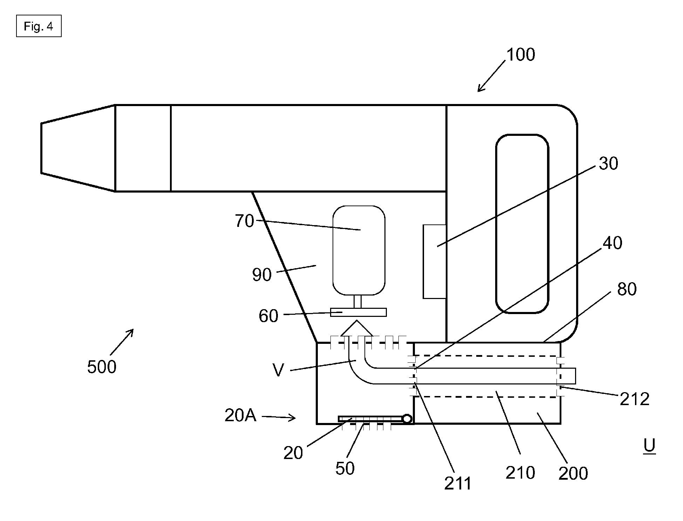

Fig. 4, 5 und 6 zeigen die erfindungsgemäße Handwerkzeugmaschine 100 gemäß einer dritten Ausführungsform. Die Handwerkzeugmaschine 100 gemäß der dritten Ausführungsform ist im Wesentlichen identisch mit der Handwerkzeugmaschine 100 gemäß der zweiten Ausführungsform. Im Unterschied zu der Handwerkzeugmaschine 100 gemäß der zweiten Ausführungsform enthält die Handwerkzeugmaschine 100 gemäß der dritten Ausführungsform zusätzlich ein Strömungssteuermittel, welches dazu ausgestaltete ist, den durch den Kühlungslüfter 60 erzeugten Volumenstrom V zwischen dem ersten Lüftungsöffnungsabschnitt 40 und dem zweiten Lüftungsöffnungsabschnitt 50 zu verteilen. Wie in Fig. 4, 5 und 6 dargestellt, ist das Strömungssteuermittel in Form einer Umschaltklappe 20 ausgestaltet. Die Umschaltklappe 20 ist dabei so in dem Werkzeuggehäuse 90 angeordnet, dass diese stufenlos und reversibel zwischen einer ersten Schaltstellung 20A und einer zweiten Schaltstellung 20B schwenkbar ist. Zwischen der ersten Schaltstellung 20A und der zweiten Schaltstellung 20B kann die Umschaltkappe 20 auch in einer mittleren Schaltstellung 20M eingestellt sein.

Fig. 4 zeigt die Umschaltklappe 20 in der ersten Schaltstellung 20A, bei der die Umschaltklappe 20 die zweite Lüftungsöffnungsabschnitt 50 vollständig so verschließt, dass keine Kühlungsluft aus der Umgebung U durch die zweite Lüftungsöffnungsabschnitt 50 in das Innere des Werkzeuggehäuses 90 angesaugt werden kann. Gleichzeitig ist der erste Lüftungsöffnungsabschnitt 40 komplett geöffnet, sodass der Volumenstrom V nur durch den ersten Lüftungsöffnungsabschnitt 40 in das Innere des Werkzeuggehäuses 90 angesaugt wird.

Der Akkumulator 200 erfährt hierdurch die maximale Kühlung. Die Umschaltklappe 20 steht hierzu waagerecht.

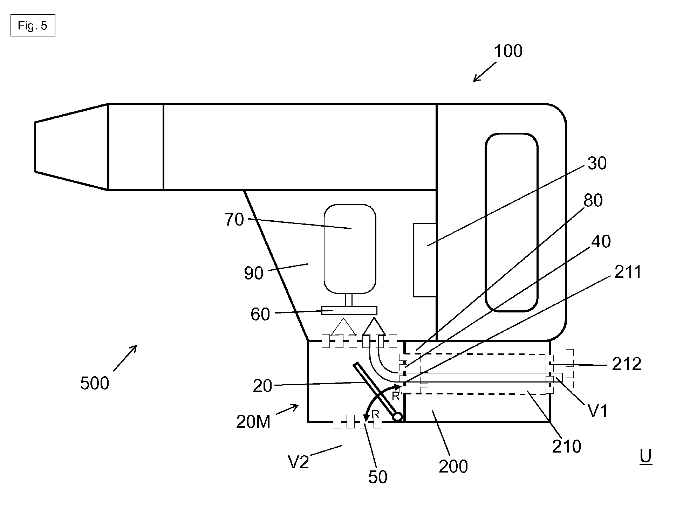

Fig. 5 zeigt die Umschaltklappe 20 in der mittleren Schaltstellung 20M, bei der der erste Lüftungsöffnungsabschnitt 40 und der zweite Lüftungsöffnungsabschnitt 50 teilweise geöffnet sind. Durch die mittlere Schaltstellung 20M kann Kühlungsluft sowohl in Form eines Volumenstroms V1 durch den ersten Lüftungsöffnungsabschnitt 40 als auch in Form eines Volumenstroms V2 durch den zweiten Lüftungsöffnungsabschnitt 50 strömen.

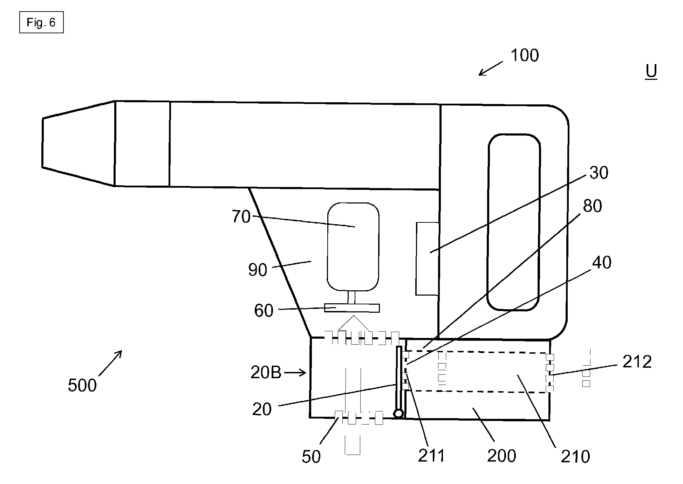

Fig. 6 die Umschaltklappe 20 in der zweiten Schaltstellung 20B, bei der die Umschaltklappe 20 die erste Lüftungsöffnungsabschnitt 40 vollständig so verschließt, dass keine Kühlungsluft aus der Umgebung U durch die erste Lüftungsöffnungsabschnitt 40 in das Innere des Werkzeuggehäuses 90 angesaugt werden kann. Gleichzeitig ist der zweite Lüftungsöffnungsabschnitt 50 komplett geöffnet, sodass der Volumenstrom V nur durch den zweiten Lüftungsöffnungsabschnitt 50 in das Innere des Werkzeuggehäuses 90 angesaugt wird.

Der Akkumulator 200 erfährt hierdurch keine Kühlung in Form einer durch den inneren Lüftungskanal 210 strömenden Kühlungsluft. Der Antriebsmotor 70 erfährt hingegen die maximale Kühlung.

Die Schaltstellung der Umschaltklappe 20 wird mittels der Steuerungseinrichtung 30 gesteuert und geregelt. Die Steuerungseinrichtung 30 ist mit einem ersten Temperatursensor und einem zweiten Temperatursensor verbunden. Der erste Temperatursensor ist dabei so positioniert, dass dieser die Temperatur des Akkumulators 200 misst. Der zweite Temperatursensor ist hingegen so positioniert, dass dieser die Temperatur des Antriebsmotors misst. Die durch die jeweiligen Temperatursensoren gemessenen Temperaturdaten werden an die Steuerungseinrichtung 30 gesendet. Durch einen Vergleich mit Referenztemperaturwerten, welche in der Steuerungseinrichtung 30 hinterlegt sind, kann die Steuerungseinrichtung 30 bestimmen, ob eine zu hohe und damit kritische Temperatur für den Akkumulator 200 und/oder den Antriebsmotor 70 erreicht ist. Falls der gemessene Temperaturwert auf einen zu warmen Akkumulator 200 hinweist, sendet die Steuerungseinrichtung 30 ein entsprechendes Signal an die Umschaltklappe 20, sodass sich die Umschaltklappe 20 entweder weiter öffnet (d.h. die Umschaltklappe 20 bewegt sich in Richtung R) oder vollständig in die erste Schaltstellung 20A schwenkt. Falls jedoch der gemessene Temperaturwert auf einen zu warmen Antriebsmotor 70 hinweist, sendet die Steuerungseinrichtung 30 ein entsprechendes Signal an die Umschaltklappe 20, sodass sich die Umschaltklappe 20 entweder weiter öffnet (d.h. die Umschaltklappe 20 bewegt sich in Richtung R') oder vollständig in die zweite Schaltstellung 20B schwenkt. Wenn die gemessenen Temperaturwerte auf eine gleiche Erwärmung des Akkumulators 200 und des Antriebsmotors 70 hindeuten, stellt die Steuerungseinrichtung 30 die Umschaltklappe 20 auf eine mittlere Schaltstellung 20M ein, sodass sowohl der Akkumulators 200 als auch der Antriebsmotor 70 entsprechend gekühlt werden. Es ist dabei zu beachten, dass die Steuerungseinrichtung 30 die Umschaltklappe 20 in jede mögliche Schaltstellung zwischen der ersten Schaltstellung 20A und der zweiten Schaltstellung 20B einstellen kann. Der erste Temperatursensor und der zweite Temperatursensor sind in den Figuren nicht dargestellt. Ebenso sind auch die Verbindungen von der Steuerungseinrichtung 30 zu der Umschaltklappe 20 oder den Temperatursensoren nicht dargestellt.

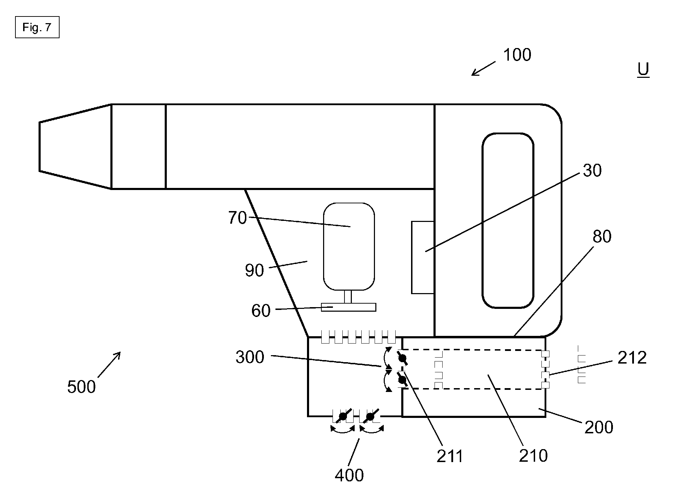

Fig. 7 zeigt die erfindungsgemäße Handwerkzeugmaschine 100 gemäß einer vierten Ausführungsform. Die Handwerkzeugmaschine 100 gemäß der vierten Ausführungsform ist im Wesentlichen identisch mit der Handwerkzeugmaschine 100 gemäß der dritten Ausführungsform. Im Unterschied zu der Handwerkzeugmaschine 100 gemäß der dritten Ausführungsform ist das Strömungssteuermittel in Form einer ersten Lamellenanordnung 300 und einer zweiten Lamellenanordnungen 400 gestaltet. Die erste Lamellenanordnung 300 ist dabei an der ersten Lüftungsöffnungsabschnitt 40 und die zweite Lamellenanordnung 400 ist an der zweiten Lüftungsöffnungsabschnitt 50 positioniert. Je nach Stellung der ersten Lamellenanordnung 300 kann der erste Lüftungsöffnungsabschnitt 40 entweder vollständig geöffnet, teilweise geschlossen oder vollständig geschlossen sein. Die erste Lamellenanordnung 300 und die zweite Lamellenanordnung 400 können hierzu reversibel in Richtung der Pfeile in Fig. 7 geschwenkt werden. Demgemäß kann je nach Stellung der zweiten Lamellenanordnung 400 der zweite Lüftungsöffnungsabschnitt 50 entweder vollständig geöffnet, teilweise geschlossen oder vollständig geschlossen sein. In Fig. 7 ist die erste und zweite Lamellenanordnung 300, 400 in einer teilweisen geschlossenen Stellung gezeigt. Die Stellung der Lamellenanordnung 300, 400 dient dazu den jeweiligen Volumenstrom durch den ersten Lüftungsöffnungsabschnitt 40 und den zweiten Lüftungsöffnungsabschnitt 50 zu erhöhen oder zu verringern. Die Lamellenanordnungen 300, 400 sind mit der Steuerungseinrichtung 30 verbunden, sodass (wie bereits vorstehend zur dritten Ausführungsform beschrieben) entsprechend des jeweils gemessenen Temperaturwertes in dem Akkumulator 200 oder in dem Antriebsmotor 70 die Steuerungseinrichtung 30 die Lamellenanordnungen 300, 400 entweder weiter öffnet oder schließt.

### Bezugszeichenliste

- V: Volumenstrom
- U: Umgebung
- 20: Umschaltklappe
- 20A: erste Schaltstellung
- 20M: mittlere Schaltstellung
- 20B: zweite Schaltstellung
- 30: Steuerungseinrichtung
- 40: erster Lüftungsöffnungsabschnitt
- 50: zweiter Lüftungsöffnungsabschnitt
- 60: Kühlungslüfter
- 70: elektrischer Antriebsmotor
- 80: Aufnahmebucht
- 90: Werkzeuggehäuse
- 100: Handwerkzeugmaschine
- 200: Akkumulator
- 210: Lüftungskanal
- 211: Frontlüftungsöffnung
- 212: Rücklüftungsöffnung
- 300: erste Lamellenanordnung
- 400: zweite Lamellenanordnung
- 500: Werkzeugsystem

## Patentansprüche

1. Handwerkzeugmaschine (100), insbesondere Bohrhammer oder Kombihammer, mit einem Werkzeuggehäuse (90), das eine zur auswechselbaren Aufnahme eines Akkumulators (200) oder Netzstromteils (300) ausgebildete Aufnahmebucht (80) aufweist, wobei die Handwerkzeugmaschine (100) einen elektrischen Antriebsmotor (70) mit einem Kühlungslüfter (60) enthält,
**dadurch gekennzeichnet, dass** das Werkzeuggehäuse (90) einen innerhalb der Aufnahmebucht (80) angeordneten ersten Lüftungsöffnungsabschnitt (40) aufweist, durch den ein durch den Kühlungslüfter (60) erzeugter Volumenstrom (V) führbar ist.

2. Handwerkzeugmaschine (100) nach Anspruch 1,
**dadurch gekennzeichnet, dass** der erste Lüftungsöffnungsabschnitt (40) derart vorgesehen ist, dass der Volumenstrom (V) durch den in die Aufnahmebucht (80) aufgenommenen Akkumulator (200) mit einer teilweisen geöffneten Oberfläche führbar ist.

3. Handwerkzeugmaschine (100) nach Anspruch 1 oder 2,
**dadurch gekennzeichnet, dass** das Werkzeuggehäuse (90) einen von dem ersten Lüftungsöffnungsabschnitt (40) verschiedenen zweiten Lüftungsöffnungsabschnitt (50) aufweist, der außerhalb der Aufnahmebucht (80) angeordnet ist und durch den der durch den Kühlungslüfter (60) erzeugte Volumenstrom (V) zumindest teilweise führbar ist.

4. Handwerkzeugmaschine (100) nach Anspruch 3,
**dadurch gekennzeichnet, dass** die Handwerkzeugmaschine (100) ein Strömungssteuermittel aufweist, das ausgebildet ist, einen durch den Kühlungslüfter (60) erzeugten Volumenstrom (V) zwischen dem ersten Lüftungsöffnungsabschnitt (40) und dem zweiten (50) Lüftungsöffnungsabschnitt zu verteilen.

5. Handwerkzeugmaschine (100) nach Anspruch 4,
**dadurch gekennzeichnet, dass** das Strömungssteuermittel in Abhängigkeit eines in dem Akkumulator (200) gemessenen Temperaturwertes regelbar ist.

6. Handwerkzeugmaschine (100) nach Anspruch 4,
**dadurch gekennzeichnet, dass** das Strömungssteuermittel in Abhängigkeit wenigstens eines in der Handwerkzeugmaschine (100) gemessenen Temperaturwertes regelbar ist.

7. Handwerkzeugmaschine (100) nach wenigstens einem der Ansprüche 4 bis 6,
**dadurch gekennzeichnet, dass** das Strömungssteuermittel als eine von einer Steuerungseinrichtung (30) betätigbare Umschaltklappe (20) ausgebildet ist, die in einer ersten Schaltstellung (20A) den ersten Lüftungsöffnungsabschnitt (40) und in einer zweiten Schaltstellung (20N) den zweiten Lüftungsöffnungsabschnitt (50) verschließt.

8. Handwerkzeugmaschine (100) nach Anspruch 7,
**dadurch gekennzeichnet, dass** die Umschaltklappe (20) in wenigstens einer Schaltstellung (20M) zwischen der ersten Schaltstellung (20A) und der zweiten Schaltstellung (20B) einstellbar ist, wodurch ein höherer Volumenstromanteil entweder durch den ersten Lüftungsöffnungsabschnitt (40) oder den zweiten Lüftungsöffnungsabschnitt (50) zugeordnet ist.

9. Handwerkzeugmaschine (100) nach einem der vorangehenden Ansprüche,
**dadurch gekennzeichnet, dass** der erste Lüftungsöffnungsabschnitt (40) und der zweite Lüftungsöffnungsabschnitt (50) voneinander verschiedenen Lüftungsöffnungen zugehörig ist.

10. Lüfterloser Akkumulator (200) für eine Handwerkzeugmaschine (100), die eine zur auswechselbaren Aufnahme des Akkumulators (200) ausgebildete Aufnahmebucht (80) und einen elektrischen Antriebsmotor (70) mit einem Kühlungslüfter (60) aufweist,
**dadurch gekennzeichnet, dass** der lüfterlose Akkumulator (200) einen inneren und zur Umgebung (U) offenen Lüftungskanal (210) aufweist, über den der lüfterlose Akkumulator (200) mittels eines durch den Kühlungslüfter (60) der Handwerkzeugmaschine (100) erzeugten Volumenstroms (V) zwangskühlbar ist, wenn der lüfterlose Akkumulator (200) in der Aufnahmebucht (80) der Handwerkzeugmaschine (100) aufgenommen ist.

11. Werkzeugsystem (500) mit einer Handwerkzeugmaschine (100) nach einem der Ansprüche 1 bis 9 und einem lüfterlosen Akkumulator (200) nach Anspruch 10.
